# EUROPEAN PATENT APPLICATION

(11) **EP 1 393 621 A1**
(43) Date of publication of application: **03.03.2004**
(21) Application number: 03018734.8
(22) Date of filing: 26.08.2003
(51) Int. Cl.: A01K 1/03, B65D 25/06

(54) **Keeping case and partition plate for the same**

(30) Priority: 28.08.2002 JP 2002248302
(71) Applicant: Euro-Bem's S.a.r.l., 06514 Carros Cedex (FR)
(72) Inventor: Migita, Yuzo, Minoo-shi Osaka (JP)
(74) Representative: HOFFMANN - EITLE

(57) **Abstract**

A keeping case and a partition plate for the same with which separating position can be freely changed without forming grooves on a case main body. A partition plate (2) to divide an inner space of an upper-opening case main body (1) as to freely slide along parallel sides (4) of an upper-opening brim (3) of the case main body (1). The partition plate (2) has a hitching portion (5), detachably hitched on the sides (4) of the case main body (1), to prevent the plate (2) from being drawn out of the case.

## Description

This invention relates to a keeping case and a partition plate for the same.

Generally, a keeping case to keep insects, small animals, fish, etc. has a case main body provided with a partition plate piece to separate males and females, and prevent hostile ones from fighting each other by separation. Figure 9 shows a conventional keeping case having the partition plate piece for separation (a lid is not shown in Figure 9).

The conventional keeping case is provided with plural pairs of vertical grooves 32 on inner faces 31 of a pair of parallel side walls of a case main body 30. And, a partition plate piece 33 is inserted downward to the pair of grooves 32 to be set.

However, production cost for metal mold is high because the plural grooves have to be formed on the case main body 30. And, size (volume) of left and right spaces divided by the partition plate piece 33 is restricted by the positions of the grooves 32 (divisional pattern is restricted to 5 stages in Figure 9).

It is therefore an object of the present invention to provide a keeping case of which main body does not require the grooves to reduce the production cost of the metal mold. And, it is another object to provide a keeping case with which the both of the left and right spaces can be made large and small steplessly.

And, it is still another object to provide a keeping case of which partition plate can be easily detached from the case when it is not required. And, it is another object to provide a keeping case with which insects and small animals can be clearly observed through the side wall of the main body. And, it is further object to provide a keeping case of which partition plate can be easily attached and detached.

The present invention will be described with reference to the accompanying drawings in which:
Figure 1 is a perspective view showing a first embodiment of the present invention;
Figure 2 is a cross-sectional side view;
Figure 3 is an enlarged perspective view of a principal portion;
Figure 4 is an explanatory enlarged cross-sectional side view of a principal portion;
Figure 5 is an explanatory enlarged cross-sectional side view of the principal portion;
Figure 6 is an explanatory enlarged cross-sectional side view of the principal portion;
Figure 7 is a top view;
Figure 8 is an enlarged cross-sectional side view of a principal portion showing a second embodiment; and
Figure 9 is a perspective view showing a conventional example.

Preferred embodiments of the present invention will now be described with reference to the accompanying drawings.

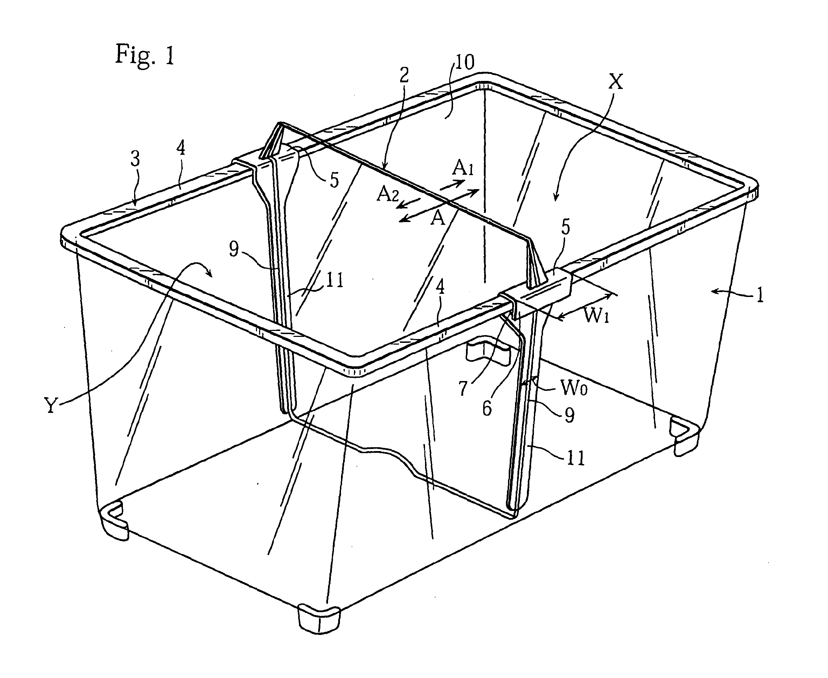

Figure 1 shows a first embodiment of the present invention. This keeping case is used to keep insects and small animals inside. The keeping case has a case main body 1 composed of transparent or translucent material (plastic, glass, etc.). Although a lid is omitted in Figures, this lid having ventilation holes (mesh) is generally provided with a handle to be portable.

A partition plate 2, to divide an inner space of the upper-opening case main body 1, is attached as to freely and steplessly slide in directions of arrows A along a pair of parallel sides 4 on an upper-opening brim 3 of the case main body 1. When the partition plate 2 is slid in an arrow A₁ direction, a space X on a right side of the case main body 1 is made smaller and a space Y on a left side is made larger. 0n the contrary, when the partition plate 2 is slid in an arrow A₂ direction, the space X on the right side of the case main body 1 is made larger and the space Y on the left side is made smaller.

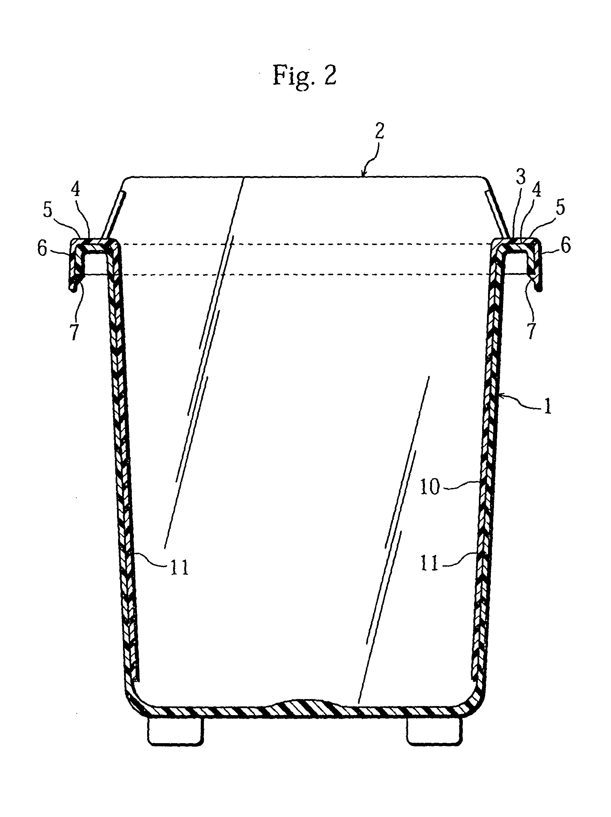

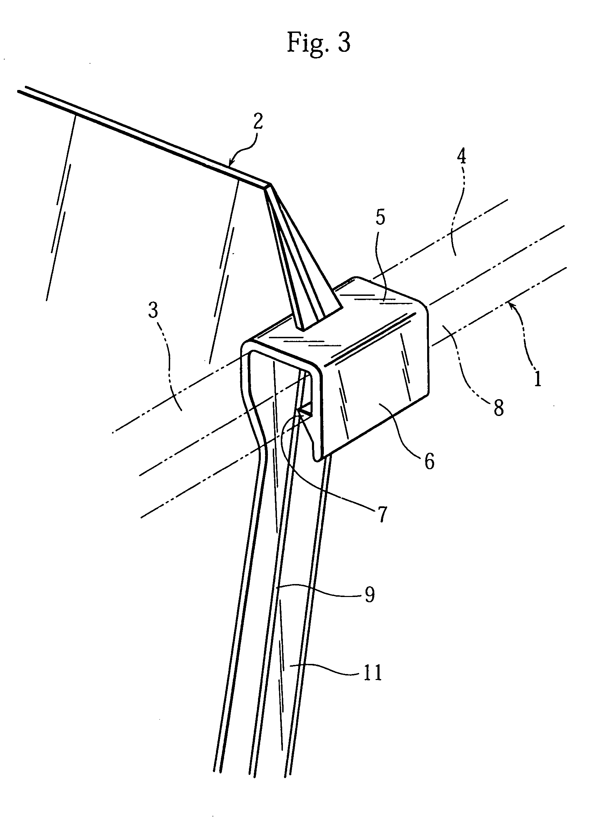

As shown in Figure 2 and Figure 3, the partition plate 2 has hitching portions 5 of inverted U-shaped, to prevent the plate from being drawn out of the case, detachably hitched on a pair of sides 4 of the case main body 1. The hitching portion 5 has an elastically deformable holding piece portion 6 and a (wedge shaped) claw portion 7, of which cross section is approximately right-angled triangle, protruding from an inner side of the holding piece portion 6.

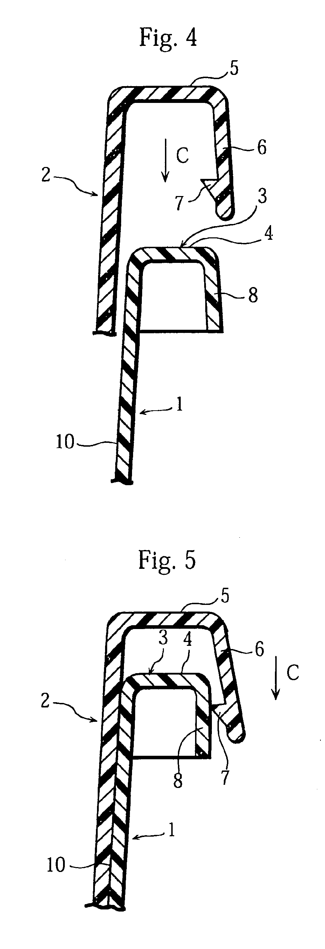

Figures 4 through 6 show how the hitching portion 5 is hitched on the case main body 1 when the partition plate 2 is attached to the case main body 1. First, as shown in Figure 4, the partition plate 2 above the case main body 1 is moved in an arrow C direction.

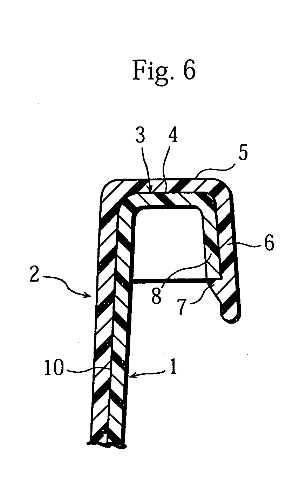

Next, as shown in Figure 5, the claw portion 7 contacts a turnback wall portion 8 to elastically deform the holding piece portion 6 and the turnback wall portion 8. Then, the hitching portion 5 is hitched on the case main body 1 as shown in Figure 6 by elastic resilient force of the holding piece portion 6 and the turnback wall portion 8.

That is to say, the holding piece portion 6 always has elastic force in an inward direction (toward the left side in Figures 4 through 6), and the turnback wall portion 8 always has elastic force in an outward direction (toward the right side in Figures 4 through 6). When the claw portion 7 contacts the turnback wall portion 8 of the case main body 1, the holding piece portion 6 is elastically deformed outward and the turnback wall portion 8 is elastically deformed inward. And, when the claw portion 7 passes a lower end of the turnback wall portion 8, the claw portion 7 is hitched on the lower end of the turnback wall portion 8 to attach the hitching portion 5 to the case main body 1.

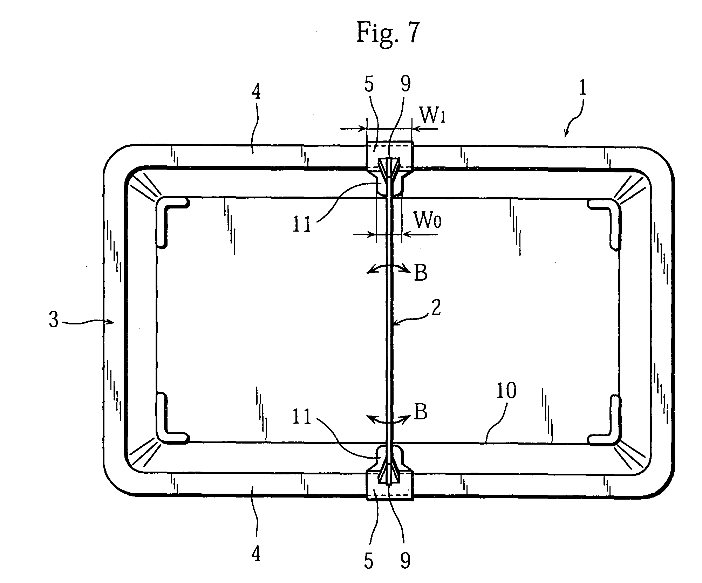

As shown in Figure 1 and Figure 7, the partition plate 2 has a belt piece portion 11 facing an inner face of the case main body 1 on each of side edges 9 as to be at right angles with each of the side edges 9 to prevent falling and inclining. The belt piece portion 11 prevents the partition plate 2 from deviating in arrows B directions in Figure 7, namely, from falling and inclining.

Maximum width dimension W₀ of the belt piece portion 11 is set to be 5mm ≦ W₀ ≦30mm. If the maximum width dimension W₀ is less than 5mm, the partition plate 2 may be deviated and damaged by receiving force in the deviation direction of the partition plate 2 (namely, the direction of the arrows B in Figure 7). And, if the maximum width dimension W₀ is more than 30mm, material of the belt piece portion 11 is excessively used.

Maximum width dimension W₁ of the hitching portion 5 is set to be 10mm ≤ W₁ ≤50mm. When the maximum width dimension W₁ is within this range, the partition plate 2 is effectively prevented further from deviating in the arrow B direction.

If the maximum width dimension W₁ is less than 10mm, the partition plate 2 may be deviated and damaged by receiving force in the deviation direction of the partition plate 2 (namely, the direction of the arrows B in Figure 7). And, if the maximum width dimension W₁ is more than 50mm, material of the hitching portion 5 is excessively used.

The belt piece portion 11 is made as to contact the inner face 10 or make a small gap between the inner face 10 to prevent the small animals in the case from passing through the gap. The slide of the partition plate 2 is impeded if the belt piece portion 11 excessively fit to the inner face 10. And, if the gap between the belt piece portion 11 and the inner face 10 is large, function of the case to separate small animals according to the species by the partition plate 2 is spoiled because the small animals pass through the gap.

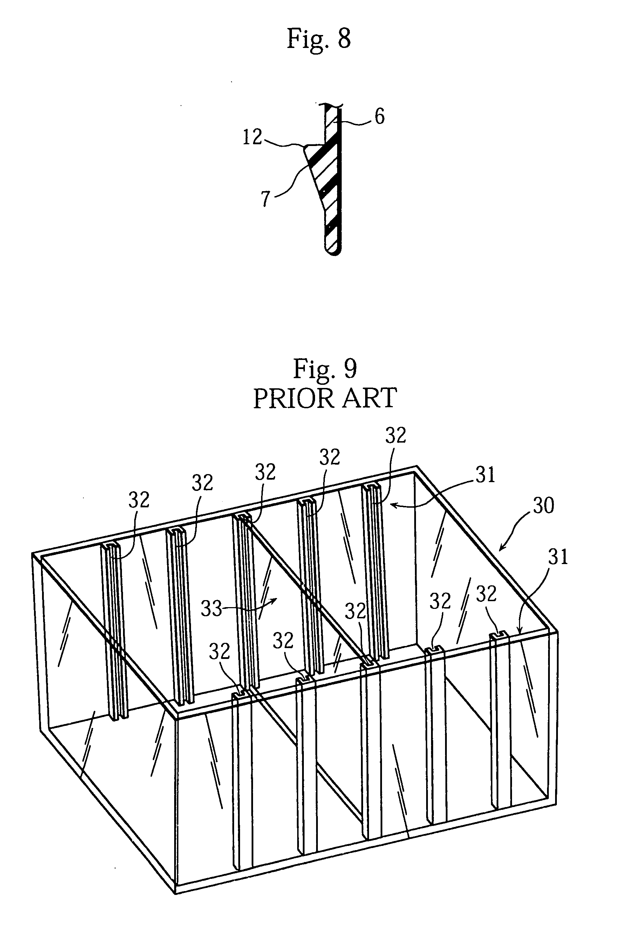

Figure 8 shows a second embodiment in which the claw portion 7 of the partition plate 2 (refer to Figures 1 through 7) has a small R portion 12 in its cross-sectional configuration. By this construction, possibility of damaging the case main body 1 and fingers when the partition plate 2 is attached to and detached from the case main body 1 (refer to Figures 1 through 7) can be eliminated.

According to the keeping case and the partition plate for the same, production cost of the metal mold is reduced without forming grooves on the case main body 1. And, size of the both of the divided spaces X and Y can be steplessly made larger and smaller. And, the partition plate 2 can be easily detached from the case when it is not required. And, insects and small animals in the case can be clearly observed through the side wall of the case main body 1.

And, the partition plate 2 can be easily attached and detached. And, the partition plate 2 can be kept vertical without falling and inclining.

## Claims

1. A keeping case comprising a partition plate (2), to divide an inner space of an upper-opening case main body (1), attached to the case main body (1) as to slide along a pair of parallel sides (4) of an upper opening brim (3) of the case main body (1), and having hitching portions (5), to prevent the partition plate (2) from being drawn out of the case main body (1), detachably hitched on the pair of sides (4) of the case main body (1).

2. The keeping case as set forth in claim 1, wherein the hitching portion (5) has an elastically-deformable holding piece portion (6) and a claw portion (7) protruding from the holding piece portion (6).

3. The keeping case as set forth in claim 1 or claim 2, wherein the partition plate (2) has a belt piece portion (11), facing an inner face (10) of the case main body (1), to prevent the partition plate (2) from falling and inclining on each of side edges (9) of the partition plate (2).

4. A partition plate to divide an inner space of an upper-opening case main body (1) of a keeping case provided with the case main body (1) and a lid to open and close the case, having hitching portions (5), to prevent the partition plate from being drawn out of the case main body (1), detachably hitched on the pair of sides (4) of an upper-opening portion (3) of the case main body (1).

5. The partition plate as set forth in claim 4, wherein the hitching portion (5) has an elastically-deformable holding piece portion (6) and a claw portion (7) protruding from the holding piece portion (6).

6. The partition plate as set forth in claim 4 or claim 5, wherein the partition plate has a belt piece portion (11), facing an inner face (10) of the case main body (1), to prevent the partition plate from falling and inclining on each of side edges (9) of the partition plate as to be at right angles with each of the side edges (9).
